# EUROPÄISCHE PATENTANMELDUNG

(11) **EP 2 589 860 A1**
(43) Veröffentlichungstag der Anmeldung: **08.05.2013**
(21) Anmeldenummer: 11187450.9
(22) Anmeldetag: 02.11.2011
(51) Int. Cl.: F21V 14/02, B60Q 1/26

(54) **Kraftfahrzeugleuchte**

(71) Anmelder: odelo GmbH, 71409 Schwaikheim (DE)
(72) Erfinder: Vollmer, Marco, 71332 Waiblingen (DE)
(74) Vertreter: Benninger, Johannes

(57) **Zusammenfassung**

Es wird eine Kraftfahrzeugleuchte (01) mit einem von einem Leuchtengehäuse und einer Lichtscheibe umschlossenen Leuchteninnenraum beschrieben. In dem Leuchteninnenraum sind mindestens eine Leuchtenkammer (01) mit wenigstens einem Reflektor (02) und zumindest einem Leuchtmittel (03) mit mindestens einer Lichtquelle (04) beherbergt. In dem Reflektor (02) ist mindestens eine Aussparung (05) als Lampenloch für wenigstens eine Lichtquelle (04) des Leuchtmittels (03) vorgesehen. Es ist eine die Aussparung (05) beim Blick von außerhalb der Kraftfahrzeugleuchte durch die Lichtscheibe hindurch überdeckende Abdeckblende (06) vorgesehen. Die mindestens eine Lichtquelle (04) ist mit Blick auf die der Lichtscheibe zugewandte Vorderseite (07) des Reflektors (02) gesehen hinter der Abdeckblende (06) angeordnet. Dabei ist eine Verstellung des Strahlengangs des von der mindestens einen Lichtquelle (04) in den Reflektor (02) abgestrahlten Lichts zwischen mindestens zwei Strahlengängen vorgesehen, wenigstens einem ersten Strahlengang in einem ersten Zustand der Leuchtenkammer (01) zur Erfüllung einer ersten Lichtfunktion und zumindest einem zweiten Strahlengang in einem zweiten Zustand der Leuchtenkammer (01) zur Erfüllung einer zweiten Lichtfunktion. Der die Aussparung (05) umgebende Reflektor (02) reflektiert das in ihn in den unterschiedlichen Strahlengängen eingestrahlte Licht an der Abdeckblende (06) vorbei aus der Leuchtenkammer (01) heraus.

## Beschreibung

Die Erfindung betrifft eine Kraftfahrzeugleuchte gemäß dem Oberbegriff des Anspruchs 1.

Eine Kraftfahrzeugleuchte umfasst im Wesentlichen einen von einem Leuchtengehäuse und einer Lichtscheibe umschlossenen Leuchteninnenraum und mindestens ein darin beherbergtes Leuchtmittel für wenigstens eine Lichtfunktion der Kraftfahrzeugleuchte. In dem Leuchteninnenraum kann mindestens ein hinter wenigstens einer Lichtquelle des zumindest einen Leuchtmittels angeordneter Reflektor untergebracht sein. Der Reflektor kann zumindest zum Teil durch ein separates Bauteil und/oder durch wenigstens einen Teil des Leuchtengehäuse selbst, beispielsweise vermittels einer zumindest teilweisen reflektierenden Beschichtung, gebildet sein.

Wenigstens einer Lichtquelle des Leuchtmittels können ein oder mehrere Optikelemente, wie etwa mindestens eine Linse, mindestens ein Rinnenkonzentrator, z.B. mindestens eine Parabolrinne (CPC; Compound Parabolic Concentrator) oder dergleichen zur Ausformung einer definierten Abstrahlcharakteristik zugeordnet sein.

Die Lichtscheibe ist durch eine transparente Abdeckung gebildet, welche den Leuchteninnenraum sowie die von diesem beherbergten Bauteile gegen Witterungseinflüsse schützt.

In dem Leuchteninnenraum kann im Strahlengang zwischen wenigstens einer Lichtquelle des Leuchtmittels und der Lichtscheibe wenigstens eine Optikscheibe angeordnet sein, welche beispielsweise eine bestimmte Struktur und/oder Maskierung aufweisen kann, etwa um bei einer klaren, beispielsweise für einen Betrachter eine Tiefenwirkung bewirkenden Lichtscheibe das Leuchtmittel und/oder dessen mindestens eine Lichtquelle zu kaschieren. Das Leuchtengehäuse bzw. der Leuchteninnenraum kann in mehrere Leuchtenkammern mit jeweils eigenen Lichtquellen und/oder Leuchtmitteln, eventuell Reflektoren und/oder Optikelementen und/oder Optikscheiben, sowie gegebenenfalls Lichtscheiben unterteilt sein, von denen mehrere oder alle Leuchtenkammern gleiche oder jede Leuchtenkammer eine andere Lichtfunktionen erfüllen kann.

Bei einer Lichtfunktion handelt es sich dabei um eine zur Erfüllung einer Aufgabe vorgesehene Funktion der Kraftfahrzeugleuchte. Jede Kraftfahrzeugleuchte erfüllt je nach Ausgestaltung eine oder mehrere Aufgaben bzw. Funktionen. Zur Erfüllung jeder Aufgabe bzw. Funktion ist eine Lichtfunktion der Kraftfahrzeugleuchte vorgesehen. Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer Schlusslicht- oder Rücklichtfunktion, zur Sicherstellung einer Sichtbarkeit des Kraftfahrzeugs bei Tag und/oder Nacht, wie etwa bei einer Ausgestaltung als Heckleuchte oder Tagfahrleuchte. Beispiele für Kraftfahrzeugleuchten sind am Fahrzeugbug, an den Fahrzeugflanken und/oder an den Seitenspiegeln sowie am Fahrzeugheck angeordnete Wiederholblinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Ein Leuchtmittel für wenigstens eine Lichtfunktion umfasst zumindest wenigstens eine Lichtquelle, beispielsweise mindestens eine Glühlampe oder mindestens eine Gasentladungslampe oder mindestens eine Leuchtdiode sowie gegebenenfalls Kombinationen hiervon.

Beispielsweise kommen als Lichtquellen von Leuchtmitteln für Kraftfahrzeugleuchten unter anderem wegen ihres geringen Stromverbrauchs vermehrt Leuchtdioden zum Einsatz. Diese bestehen aus mindestens einem Lichtemittierende-Diode-Halbleiter-Chip, kurz LED-Chip, sowie wenigstens einer beispielsweise durch Spritzgießen angeformten, den mindestens einen LED-Chip ganz oder teilweise umhüllenden Primäroptik. Auch sind Kraftfahrzeugleuchten bekannt, in denen reine LED-Chips ohne angeformte Primäroptiken zum Einsatz kommen. Im Folgenden wird deshalb der Einfachheit halber nicht mehr zwischen Leuchtdiode und LED-Chip unterschieden und statt dessen einheitlich der Begriff LED stellvertretend für beide Ausgestaltungen verwendet, es sei denn, es ist explizit etwas anderes erwähnt. Herausragende Eigenschaften von LEDs im Vergleich zu anderen, konventionellen Lichtquellen von Leuchtmitteln sind eine wesentlich längere Lebensdauer und eine wesentlich höhere Lichtausbeute bei gleicher Leistungsaufnahme. Dadurch und unter anderem auch wegen ihrer kompakteren Abmessungen können durch Verwendung von LEDs als Lichtquelle von Leuchtmitteln Kraftfahrzeugleuchten verwirklicht werden, die an fast jede nur erdenkliche Einbausituation angepasst sein können.

Eine typische Anpassung an die Einbausituation betrifft die äußere Gestalt der Kraftfahrzeugleuchte. Diese äußere Gestalt der Kraftfahrzeugleuchte ist beispielsweise durch die gestalterische Formgebung eines Kraftfahrzeugs sowie durch die vorgesehene Kontur der Kraftfahrzeugleuchte vorgegeben und spiegelt sich im so genannten Strakverlauf der Kraftfahrzeugleuchte wider.

Eine weitere typische Anpassung einer Kraftfahrzeugleuchte an die Einbausituation betrifft den zur Verfügung stehenden Bauraum. Dabei wird ein möglichst geringer Bauraumbedarf angestrebt, beispielsweise um bei einer Ausgestaltung einer Kraftfahrzeugleuchte als Heckleuchte mehr Platz für den Kofferraum eines Kraftfahrzeugs zur Verfügung zu haben und um gleichzeitig Material und Gewicht zu sparen, wodurch beispielsweise Verbrauchseinsparungen von Treibstoff einhergehend mit einer Verringerung der Umweltbelastung sowohl bei der Herstellung, als auch im Betrieb des Kraftfahrzeugs erreicht werden können.

Um möglichst wenig Bauraum zu beanspruchen ist bekannt, mehrere Lichtfunktionen in einer Leuchtenkammer einer Kraftfahrzeugleuchte unterzubringen.

Bislang sind hierzu verschiedene und/oder unterschiedlich stark bestromte Lichtquellen gleicher oder unterschiedlicher Lichtfarbe vorgesehen, vorausgesetzt, die zu verwirklichenden Lichtfunktionen weisen die gleichen oder zumindest stark ähnlichen Abstrahlcharakteristika auf. Die Abstrahlcharakteristik einer Lichtfunktion zeichnet sich dabei durch eine die gesetzlichen Vorgaben an eine Lichtfunktion einer Kraftfahrzeugleuchte einhaltende Leuchtdichteverteilung in einer oder mehreren Vorzugsrichtungen aus. Daraus folgt, dass nach dem Stand der Technik zur Verwirklichung mehrerer Lichtfunktionen in einer Leuchtenkammer die an die zu verwirklichenden Lichtfunktionen gestellten gesetzlichen Anforderungen an die Sichtbarkeit und Lichtverteilung sowie Leuchtdichteverteilung identisch oder zumindest stark ähnlich sein müssen.

Neben der Anpassung an die Einbausituation müssen Kraftfahrzeugleuchten sehr hohe Qualitätsanforderungen erfüllen. So werden beispielsweise bereits geringe Abweichungen von einem homogenen Eindruck beispielsweise des Gesamtbilds und/oder der Ausleuchtung beispielsweise einer Leuchtenkammer, wie beispielsweise ein dunkel erscheinendes Lampenloch und/oder ein möglicherweise blendender direkter Blick des Betrachters auf die Lichtquelle eines Leuchtmittels als qualitätsmindernd angesehen.

Um den hohen Qualitätsanforderungen an Kraftfahrzeugleuchten gerecht zu werden, ist ein Ziel bei der Entwicklung von Kraftfahrzeugleuchten, das oder die Lichtquellen einer oder mehrerer Lichtfunktionen einer Kraftfahrzeugleuchte vor dem direkten Blick eines Betrachters zu verbergen.

Um eine oder mehrere, ihr Licht in einen oder mehrere Reflektoren strahlende Lichtquellen eines Leuchtmittels dem Blick des Betrachters zu entziehen, welches Licht mittels Reflexion an entsprechenden Formen bzw. Reflektorstrukturen auf dem Reflektor, wie etwa Kissen, Walzen, etc., in die gewünschte Richtung gelenkt wird, ist bekannt, die Lichtquelle beispielsweise oberhalb oder unterhalb des Reflektors oder neben diesem anzuordnen und das von ihr abgestrahlte Licht seitlich in einen Reflektor einzustrahlen. Hierdurch ist die Lichtquelle für den Betrachter beim direkten Blick aus normaler Richtung, wie dies der Sicht eines anderen Verkehrsteilnehmers bei in ein Kraftfahrzeug eingebautem Zustand entspricht, auf die Kraftfahrzeugleuchte nicht erkennbar. Diese wird erst sichtbar, sobald der Betrachter von oben oder unten her in die Kraftfahrzeugleuchte blickt. Da dies tatsächlich eher selten vorkommt, können Lichtquellen auf diese Art gut verborgen werden und der Reflektor weitestgehend lampenlochfrei gehalten werden.

Aufgrund der meist starken Strakverläufe ist es nicht immer möglich die Lichtquellen in einer lichttechnisch günstigen Lage, wie etwa direkt abstrahlend oder von oben oder unten her in den Reflektor einstrahlend einzubinden. Zum anderen kann hierdurch unabhängig vom Strakverlauf nicht vollständig sichergestellt werden, dass dadurch ein direkter Blick auf die Lichtquelle von außen durch die Lichtscheibe hindurch vollständig verwehrt ist.

So kommt es insbesondere bei starken Strakverläufen vor, dass die Lichtquellen bei der Betrachtung von außerhalb der Kraftfahrzeugleuchte durch die Lichtscheibe hindurch teilweise sichtbar sind. Eine zumindest aus einigen Blickwinkeln von außerhalb der Kraftfahrzeugleuchte durch die Lichtscheibe hindurch sichtbare Lichtquelle eines zur Erfüllung einer Lichtfunktion vorgesehenen Leuchtmittels wird als störend und den Qualitätseindruck nachhaltig negativ beeinflussend empfundenen.

Ein vollständiges Verbergen der Lichtquellen ist erst z. B. mittels auch als Lichtleiter bezeichneter, totalreflektierender (TIR; Total Internal Reflection), lichtleitender Elemente mit einem Lichteinkoppelbereich und einem Lichtauskoppelbereich möglich, die das in sie am Lichteinkoppelbereich eingekoppelte Licht von einer verborgen angeordneten Lichtquelle in Richtung Auskoppelbereich leiten und dort wieder auskoppeln. Das ausgekoppelte Licht kann dabei direkt, ohne einen Reflektor in der gewünschten Richtung abgestrahlt werden, oder indirekt, indem es in einen Reflektor eingestrahlt wird, der es dann in die gewünschte Richtung reflektiert.

Bei einer Kraftfahrzeugleuchte können ein oder mehrere Lichtleiter vorgesehen sein, beispielsweise um eine gewünschte Lichtverteilung z.B. über die Lichtscheibe hinweg des von einer oder mehreren Lichtquellen ausgestrahlten Lichts zu erhalten.

Ein Lichtleiter, in den Licht mindestens einer Lichtquelle an mindestens einer Lichteinkoppelfläche des Lichteinkoppelbereichs ein- und an mindestens einer von der Lichteinkoppelfläche verschiedenen Lichtauskoppelfläche des Lichtauskoppelbereichs wieder ausgekoppelt wird, kann dabei als ein separates Bauteil im Leuchteninnenraum beherbergt oder Teil eines Leuchtmittels sein.

Beispielsweise kann ein Leuchtmittel einen oder mehrere Lichtleiter sowie eine oder mehrere, das von ihnen ausgestrahlte Licht zumindest zum Teil in den wenigstens einen Lichtleiter einkoppelnde Lichtquellen umfassen. Ein Lichtleiter eines solchen Leuchtmittels kann beispielsweise als Primäroptik einer oder mehrerer LEDs dienen bzw. als eine solche Primäroptik ausgebildet sein.

Der Lichtleiter kann beispielsweise stabförmig als so genannter Stablichtleiter und/oder flächig als so genannter Flächenlichtleiter ausgebildet sein, mit einer auf seiner beispielsweise normal zur Hauptabstrahlrichtung einer Kraftfahrzeugleuchte orientierten Vorderseite angeordneten Lichtauskoppelfläche.

Nachteilig an Lichtleitern ist deren kostspieliger und hoher Entwicklungs- und Herstellungsaufwand. Ein weiterer Nachteil ist, dass ein insbesondere einem starken Strakverlauf angepasster Lichtleiter eine inhomogene Ausleuchtung durch das in ihn eingekoppelte Licht erfährt, was wiederum als qualitätsmindernd empfunden wird.

Um einen direkten Blick auf eine im eingeschalteten Zustand eine erhebliche Blendwirkung darstellende Lichtquelle eines Leuchtmittels zu verhindern sind darüber hinaus Blenden bekannt, welche von außen durch die Lichtscheibe hindurch gesehen vor der durch ein Lampenloch im Reflektor in eine Leuchtenkammer ragenden Lichtquelle angeordnet sind.

Durch DE 100 15 759 A1 ist eine Kraftfahrzeugleuchte mit einem Leuchtmittel mit mindestens einer Lichtquelle und einem Reflektor bekannt. Der Reflektor reflektiert von der Lichtquelle abgestrahltes Licht in Richtung auf eine durch eine Lichtscheibe abgeschlossene Lichtaustrittsöffnung. Eine Blende verhindert den direkten Strahlengang des Lichts von der Lichtquelle zur Austrittsöffnung. Die Blende ist auf ihrer der Lichtquelle zugewandten Seite als Abschirmreflektor ausgeführt, welcher von der Lichtquelle abgestrahltes Licht in Richtung auf den Reflektor reflektiert.

Nachteilig hieran ist der hohe Bedarf an Bautiefe hinter und vor dem Reflektor. Ein weiterer Nachteil hieran ist, dass die Lichtaustrittsöffnung dabei nur einen geringen Teil der Ansichtsfläche der Kraftfahrzeugleuchte aus Richtung des aus der Austrittsöffnung austretenden Lichts einnimmt.

Eine weitere Möglichkeit, den direkten Blick auf eine Lichtquelle einer Kraftfahrzeugleuchte zu verwehren ist die Verwendung einer zwischen Lichtquelle und Lichtscheibe angeordneten, strukturierten Optikscheibe.

Nachteilig hieran ist die Verringerung der Güte des optischen Systems, da die Optikscheibe einen Teil des von der Lichtquelle abgestrahlten Lichts absorbiert und/oder zurück reflektiert und darüber hinaus zumindest zum Teil diffus streut, wodurch eine höhere Lichtleistung erforderlich ist, um beispielsweise gesetzlich vorgegebene Werte einer Leuchtdichteverteilung in einer oder mehreren Vorzugsrichtungen einzuhalten. Damit einhergehend wird hierdurch ein zur Stromversorgung vorgesehenes Bordnetz eines Kraftfahrzeugs stärker belastet, weil insgesamt ein höherer Lichtstrom benötigt wird.

Der Erfindung liegt die Aufgabe zu Grunde, ein Kraftfahrzeugleuchte zu entwickeln, welche bei geringem Bauraumbedarf mehrere Lichtfunktionen gleicher oder unterschiedlicher Lichtfarbe und/oder gleicher oder unterschiedlicher Abstrahlcharakteristik mit nur einer Leuchtenkammer zu erfüllen in der Lage ist bzw. die Ausführung mehrerer verschiedener Lichtfunktionen in nur einer Leuchtenkammer erlaubt und bei der im auch als Warmzustand bezeichneten eingeschalteten Zustand des Leuchtmittels ein direkter Blick auf ein zur Erfüllung mindestens einer Lichtfunktion der Kraftfahrzeugleuchte vorgesehenes Leuchtmittel verhindert ist, und bei der zumindest im auch als Kaltzustand bezeichneten ausgeschalteten Zustand des Leuchtmittels der Blick auf ein dunkel erscheinendes Lampenloch verwehrt ist. Die Kraftfahrzeugleuchte soll darüber hinaus eine hohe Güte ihres optischen Systems aufweisen, um die Belastung eines Bordnetzes eines Kraftfahrzeugs möglichst gering zu halten, einhergehend mit einer Verringerung des Kraftstoff- bzw. Energiebedarfs des Kraftfahrzeugs.

Die Aufgabe wird gelöst mit den Merkmalen des unabhängigen Anspruchs.

Die Erfindung sieht demnach zur Lösung der Aufgabe unter gleichzeitiger Behebung der genannten Nachteile des Standes der Technik eine Kraftfahrzeugleuchte mit einem von einem Leuchtengehäuse und einer Lichtscheibe umschlossenen Leuchteninnenraum vor. Der Leuchteninnenraum beherbergt mindestens eine Leuchtenkammer mit wenigstens einem Reflektor und zumindest einem Leuchtmittel mit mindestens einer Lichtquelle. In dem Reflektor ist mindestens eine Aussparung als Lampenloch für wenigstens eine Lichtquelle des Leuchtmittels vorgesehen. Darüber hinaus ist eine Abdeckblende vorgesehen, welche den Blick auf das Lampenloch und die Lichtquelle verwehrt.

Die Abdeckblende kann beispielsweise mit der Aussparung korrespondieren und/oder die Aussparung vorzugsweise in Form, Funktion und Aussehen des Reflektors nachbilden.

Die Lichtquelle ist mit Blick auf die der Lichtscheibe zugewandte Vorderseite des Reflektors, beispielsweise in Richtung einer lokalen Flächennormalen einer durch die Aussparung gebildeten Fläche gesehen, hinter der Abdeckblende angeordnet. Mit anderen Worten ist die Lichtquelle in Blickrichtung von außerhalb der Kraftfahrzeugleuchte durch die Lichtscheibe hindurch gesehen hinter der der Lichtscheibe abgewandten Rückseite der Abdeckblende angeordnet und dadurch vor direkten Blicken geschützt bzw. verborgen.

Die Kraftfahrzeugleuchte zeichnet sich durch eine Verstellbarkeit bzw. Verstellung des Strahlengangs des von der mindestens einen Lichtquelle in den Reflektor abgestrahlten Lichts in bzw. zwischen mindestens zwei unterschiedlichen Strahlengängen vor, um anhand der unterschiedlichen Strahlengänge vermittels nur einer Leuchtenkammer mindestens zwei beliebige Lichtfunktionen gleicher oder unterschiedlicher Lichtfarbe und/oder gleicher oder unterschiedlicher Abstrahlcharakteristika zu verwirklichen.

Die unterschiedlichen Strahlengänge werden in mindestens zwei verschiedenen Zuständen der Leuchtenkammer erhalten, wenigstens einem ersten Strahlengang in einem ersten Zustand der Leuchtenkammer zur Erfüllung mindestens einer ersten Lichtfunktion und zumindest einem zweiten Zustand der Leuchtenkammer zur Erfüllung mindestens einer zweiten Lichtfunktion.

Der Reflektor reflektiert das in den unterschiedlichen Strahlengängen von der mindestens einen Lichtquelle in ihn abgestrahlte Licht durch die Lichtscheibe hindurch aus der Kraftfahrzeugleuchte heraus.

Dabei kann der erste Strahlengang derart ausgelegt sein, dass eine fokussierte Abstrahlcharakteristik erhalten wird, wohingegen der zweite Strahlengang derart ausgelegt sein kann, dass eine defokussierte Abstrahlcharakteristik erhalten wird.

Die unterschiedlichen Strahlengänge können beispielsweise durch eine relative Verstellbarkeit der mindestens einen Lichtquelle in wenigstens zwei unterschiedlichen Positionen gegenüber dem Reflektor verwirklicht sein. Hierdurch werden durch Einnahme unterschiedlicher Positionen der mindestens einen Lichtquelle zum Brennpunkt des die Aussparung umgebenden Reflektors verschiedene Strahlengänge einhergehend mit verschiedenen Licht- und Leuchtdichtenverteilungen aufweisenden Abstrahlcharakteristika erhalten.

Beim ersten Strahlengang, beispielsweise in der ersten Position der mindestens einen Lichtquelle relativ zum Reflektor, wird im Betrieb mindestens einer Lichtquelle eine wenigstens einer ersten Lichtfunktion genügende Licht- und Leuchtdichtenverteilung einer ersten Abstrahlcharakteristik erhalten. Beim zweiten Strahlengang, beispielsweise in der zweiten Position der mindestens einen Lichtquelle relativ zum Reflektor, wird im Betrieb mindestens einer Lichtquelle eine wenigstens einer zweiten Lichtfunktion genügende Licht- und Leuchtdichtenverteilung einer zweiten Abstrahlcharakteristik erhalten.

Dabei kann es sich jeweils um die selbe Lichtquelle des selben Leuchtmittels oder um verschiedene Lichtquellen des selben oder verschiedener Leuchtmittel handeln.

Durch Verwendung mehrerer, vorzugsweise einzeln oder gruppenweise unabhängig voneinander schaltbarer, Licht gleicher oder unterschiedlicher Lichtfarbe abstrahlender Lichtquellen kann eine entsprechende Vielzahl an verschiedenen Lichtfunktionen in nur einer Leuchtenkammer verwirklicht werden.

Die Verstellung des Strahlengangs der mindestens einen Lichtquelle kann durch eine Bewegung der Lichtquelle relativ zum Reflektor beispielsweise entlang einer lokalen Flächennormalen zum Reflektor erfolgen.

Die Verstellung des Strahlengangs der mindestens einen Lichtquelle in den Reflektor kann eine bewegliche Anordnung der Lichtquelle oder des Reflektors oder eines Primärreflektors oder eines beispielsweise an der Abdeckblende befestigten oder angeordneten, mit dieser verstellbaren Sekundärreflektors vorsehen. Zumindest über den Primär- und/oder Sekundärreflektor kann von der Lichtquelle ausgestrahltes Licht beispielsweise direkt oder indirekt in den Reflektor reflektiert werden.

Mindestens eine Lichtquelle kann bei der Erfüllung verschiedener Lichtfunktionen unterschiedlich stark bestromt sein.

Zumindest die Abdeckblende kann beispielsweise gemeinsam mit der Lichtquelle oder unabhängig von dieser entlang einer Bewegungsbahn, bevorzugt in Richtung einer lokalen Flächennormalen einer durch die Aussparung gebildeten Fläche zumindest zwischen einem einem ersten Warmzustand der Kraftfahrzeugleuchte mit eingeschalteter Lichtquelle entsprechenden ersten Zustand der Leuchtenkammer, in dem ein erster Strahlengang vorliegt und die Leuchtenkammer eine erste Lichtfunktion mit einer ersten Lichtfarbe und einer ersten Abstrahlcharakteristik erfüllt, und einem einem zweiten Warmzustand der Kraftfahrzeugleuchte mit eingeschaltetem Leuchtmittel entsprechenden zweiten Zustand der Leuchtenkammer, in dem ein zweiter Strahlengang vorliegt und die Leuchtenkammer eine zweite Lichtfunktion mit einer zweiten Lichtfarbe und einer zweiten Abstrahlcharakteristik erfüllt, relativ zum Reflektor beweglich angeordnet sein, um die verschiedenen Strahlengänge zu verwirklichen. Dabei können im ersten und im zweiten Warmzustand gleiche oder unterschiedliche Lichtquellen des Leuchtmittels aktiv sein.

Die erste und die zweite Lichtfarbe können identisch oder verschieden sein. Hierzu können eine oder mehrere Lichtquellen vorgesehen sein, die Licht gleicher oder unterschiedlicher Lichtfarbe abstrahlen.

Darüber hinaus können die erste und die zweite Abstrahlcharakteristik gleich oder unterschiedlich sein.

Vorzugsweise ragt die Lichtquelle zumindest in dem zweiten Zustand auf der Vorderseite des Reflektors über die durch die von der vom Reflektor begrenzten Aussparung gebildete Fläche.

Darüber hinaus kann ein einem Kaltzustand der Kraftfahrzeugleuchte mit ausgeschaltetem Leuchtmittel entsprechender dritter Zustand der Leuchtenkammer der Kraftfahrzeugleuchte vorgesehen sein, in dem die Abdeckblende die Aussparung im Reflektor vorzugsweise bündig oder beispielsweise anliegend an einen die Aussparung umgebenden Rand des Reflektors die Aussparung überlappend abschließt. In dem ersten und zweiten Zustand gibt die Abdeckblende die Aussparung demgegenüber frei und befindet sich beim Blick auf die Vorderseite des Reflektors gesehen vor der vom Reflektor begrenzten Aussparung.

Mindestens eine Lichtquelle kann in Blickrichtung auf die Vorderseite des Reflektors unmittelbar hinter der Abdeckblende angeordnet sein.

Die Lichtquelle kann fest stehend angeordnet sein, wohingegen Reflektor und/oder Abdeckblende relativ zu mindestens einer Lichtquelle beweglich angeordnet sein können.

Alternativ oder zusätzlich kann die Lichtquelle allein oder beispielsweise gemeinsam mit der Abdeckblende relativ zum Reflektor oder beispielsweise gemeinsam mit dem Reflektor relativ zur Abdeckblende beweglich angeordnet sein.

Bevorzugt sind nicht Reflektor und Abdeckblende und mindestens eine Lichtquelle beweglich angeordnet, sondern entweder nur der Reflektor oder nur die Abdeckblende gegebenenfalls gemeinsam mit mindestens einer Lichtquelle.

Mindestens eine Lichtquelle kann an der Abdeckblende mechanisch befestigt und elektrisch kontaktiert sein, so dass nur eine Mimik für eine zum Erhalt unterschiedlicher Strahlengänge erforderliche Relativbewegung zwischen Reflektor und Abdeckblende erforderlich ist.

Eine vorteilhafte Ausgestaltung sieht vor, dass zusätzlich ein Primärreflektor vorgesehen ist, der zum Erhalt bzw. zur Erzeugung unterschiedlicher Strahlengänge gemeinsam mit oder unabhängig von der Abdeckblende und/oder der Lichtquelle entlang einer Bewegungsbahn relativ zum die Aussparung umgebenden Reflektor zumindest zwischen zwei unterschiedlichen, wenigstens zwei verschiedenen Zuständen der Leuchtenkammer entsprechenden Positionen beweglich angeordnet sein kann. Die Lichtquelle ist dabei zwischen Abdeckblende und Primärreflektor angeordnet. Vorzugsweise nimmt der Primärreflektor im ersten und/oder im zweiten Zustand die Aussparung zumindest teilweise ein und schließt zumindest in einem der wenigstens beiden Zustände vorzugsweise bündig mit dem die Aussparung umgebenden Reflektor ab. Schließt der Primärreflektor im zweiten Zustand bündig mit dem die Aussparung umgebenden Reflektor ab, kann sich im ersten Zustand der Primärreflektor von der Abdeckblende aus gesehen vor oder hinter dem die Aussparung umgebenden Reflektor befinden. Alternativ kann der Primärreflektor im zweiten Zustand an den die Aussparung umgebenden Reflektor auf dessen der Lichtscheibe abgewandten Rückseite oder auf dessen der Lichtscheibe zugewandte Vorderseite anliegen und dabei einen die Aussparung umgebenden Rand des Reflektors überlappen, je nachdem, ob sich der Primärreflektor im ersten Zustand hinter oder vor dem die Aussparung umgebenden Reflektor befindet. Der Primärreflektor lenkt das von der Lichtquelle abgestrahlte Licht in eine oder mehrere gewünschte Richtungen gegebenenfalls durch die Lichtscheibe hindurch aus der Kraftfahrzeugleuchte heraus.

Die Abdeckblende kann auf ihrer dem Betrachter ab- und dem Reflektor bzw. der Aussparung zugewandten Rückseite mit einem Sekundärreflektor versehen sein, welcher beispielsweise vom Primärreflektor reflektiertes oder von der Lichtquelle in Richtung auf die Rückseite der Abdeckblende gestrahltes Licht in den umgebenden Reflektor reflektiert. Ist beispielsweise die Lichtquelle unbeweglich relativ zur Abdeckblende und/oder zum Reflektor angeordnet, so kann durch eine Relativbewegung zwischen Abdeckblende und dem die Aussparung umgebenden Reflektor eine Veränderung des Strahlengangs erreicht werden.

Generell kann ein Sekundärreflektor an der der Lichtscheibe abgewandten Rückseite der Abdeckblende vorgesehen sein, beispielsweise indem die Abdeckblende an ihrer der Lichtscheibe abgewandten Rückseite mit einem derartigen Sekundärreflektor beispielsweise in Form einer dort ausgebildeten und beispielsweise verspiegelten Sekundärreflektorstruktur versehen ist oder indem ein solcher Sekundärreflektor an der Rückseite der Abdeckblende angeordnet ist.

Beispielsweise kann auf der Rückseite der Abdeckblende alternativ oder zusätzlich eine Spiegeloptik für eine Lichtfunktion, wie etwa eine Seitenmarkierungslichtfunktion angebracht sein, welche nur in einer Relativposition bzw. in einem Strahlengang wirksam ist.

Eine besonders hohe Varianz an Strahlengängen einhergehend mit einer besonders hohen Effizienz des optischen Systems ergibt sich durch einen verstellbar angeordneten Primärreflektor in Verbindung mit einem an der dem die Aussparung umgebenden Reflektor zugewandten Rückseite der vorzugsweise ebenfalls verstellbar angeordneten Abdeckblende angeordneten Sekundärreflektor, so dass durch Mehrfachreflexion am Primärreflektor, dem an der Abdeckblende beispielsweise angeordneten oder befestigten Sekundärreflektor sowie dem die Aussparung umgebenden Reflektor eine Abstrahlcharakteristik beim Austritt aus der Lichtscheibe erhalten wird, welche die gesetzlichen Vorgaben an eine Lichtfunktion einer Kraftfahrzeugleuchte in Bezug auf Leuchtdichteverteilung in einer oder mehreren Vorzugsrichtungen einhält. Primärreflektor und Sekundärreflektor bzw. Abdeckblende können dabei gemeinsam und/oder unabhängig voneinander beispielsweise relativ zum die Aussparung umgebenden Reflektor und/oder zur mindestens einen Lichtquelle verstellbar angeordnet sein, um verschiedene Strahlengänge zu erhalten. Die besonders hohe Effizienz des optischen Systems kann unter anderem dadurch begründet werden, dass der die Aussparung zumindest in einem Zustand wenigstens teilweise einnehmenden Primärreflektor kein Licht durch das Lampenloch hindurch hinter den die Aussparung umgebenden Reflektor vergeudet wird.

Eine zum Erhalt unterschiedlicher Strahlengänge gegebenenfalls vorgesehene relative Bewegung zwischen Reflektor und Abdeckblende mit daran vorzugsweise angeordnetem Sekundärreflektor sowie gegebenenfalls alternativ oder zusätzlich der Lichtquelle und/oder des Primärreflektors erfolgt vorzugsweise geradlinig. Grundsätzlich kann jede beliebige Bahnkurve für die Bewegungsbahn der Relativbewegung vorgesehen sein.

Die Lichtquelle kann wenigstens einen zumindest eine Lichtaustrittsfläche aufweisenden Lichtaustrittsbereich mindestens eines Lichtleiters umfassen, in den im Warmzustand an mindestens einer von der Lichtauskoppelfläche verschiedenen Lichteinkoppelfläche eines Lichteinkoppelbereichs Licht eingekoppelt wird. Bei der Verwendung eines Lichtleiters kann dieser beispielsweise elastisch ausgeführt sein, so dass der Lichtauskoppelbereich elastisch beweglich relativ zum Lichteinkoppelbereich ist. Dadurch können die mindestens eine ihr Licht in den Lichtleiter einkoppelnden Lichtquelle und der Lichteinkoppelbereich fest und unbeweglich angeordnet sein, wohingegen der Lichtauskoppelbereich durchaus Relativbewegungen gegenüber dem Reflektor und/oder der Abdeckblende ausführen kann.

Als Lichtquelle kommen beispielsweise eine oder mehrere Licht gleicher oder unterschiedlicher Farbe abstrahlende LEDs zum Einsatz. Bei der Verwendung verschiedenfarbiger LEDs können mehrere Lichtfunktionen in ein und der selben Leuchte bzw. Leuchtenkammer der Leuchte verwirklicht werden. LEDs weisen bei gleicher Lichtstärke einen im Vergleich zu anderen Lichtquellen geringeren Stromverbrauch auf. LEDs können darüber hinaus zumindest annäherungsweise als Punktlichtquelle angesehen werden. Dies führt dazu, dass das Licht eines ausgelegten Reflektors weniger gestreut wird, als bei einer Lichtquelle in Form einer Glühlampe mit einer räumlich ausgedehnten Glühwendel. Hierdurch kann das Reflektordesign exakter ausgeführt werden, wodurch darüber hinaus eine höhere Effizienz des optischen Systems erhalten wird. Ferner weisen LEDs eine weit höhere Lebensdauer auf, als andere, zur Anwendung in einer Kraftfahrzeugleuchte in Frage kommende Lichtquellen. Durch die längere Lebensdauer wird unter Anderem durch die geringere Ausfallquote die Betriebssicherheit und damit einhergehend die Qualität der Kraftfahrzeugleuchte erhöht.

Zum Betrieb von LEDs als Lichtquellen für ein Leuchtmittel einer Kraftfahrzeugleuchte können eine oder mehrere mehr oder minder komplexe elektronische Steuerschaltungen vorgesehen sein, die beispielsweise auf einem oder mehreren Leuchtmittelträgern des Leuchtmittels angeordnet und in dem Leuchteninnenraum beherbergt sein können.

Ein einfaches Beispiel für eine elektronische Steuerschaltung betrifft die Angleichung unterschiedlicher Helligkeiten einzelner LEDs oder von LED-Strängen innerhalb einer Gruppe gemeinsam betriebener, auf einem oder mehreren Leuchtmittelträgern angeordneter LEDs. Eine solche elektronische Steuerschaltung besteht aus mindestens einem oder mehreren Vorwiderständen zur Anpassung der Vorwärtsspannung der LEDs an das Bordnetz. Beispielsweise ist bekannt, die LEDs im so genannten Binning nach Vorwärtsspannung und Intensität zu sortieren. Um Unterschiede zwischen mehreren LED-Strängen auszugleichen, die jeweils aus in Reihe geschalteten LEDs gleicher Vorwärtsspannung und Intensität bestehen, und um eine homogene Helligkeitsverteilung der benachbarten LED-Stränge aus LEDs mit unterschiedlicher Vorwärtsspannung und Intensität zu erhalten, wird zumindest jeder LED-Strang mit einem anderen Vorwiderstand versehen.

LEDs bedürfen darüber hinaus beim Einsatz als Lichtquelle insbesondere in Kraftfahrzeugleuchten oft einer separaten Ausfallerkennung. Dies ist bedingt durch die geringe Leistungsaufnahme von LEDs im Allgemeinen. Beispielsweise ist ein in einem Kraftfahrzeug untergebrachtes Steuergerät nicht in der Lage, eine dem Ausfall einer oder weniger LEDs entsprechende Änderung der Leistungsentnahme aus dem Bordnetz zu erkennen, da eine hieraus resultierende Bordnetzspannungsänderung unterhalb der im normalen Betrieb eines Kraftfahrzeugs auftretenden Bordnetzspannungssschwankung liegt. Eine beispielsweise in der Kraftfahrzeugleuchte untergebrachte elektronische Schaltungsanordnung zur Ausfallerkennung erfasst den Ausfall einer oder mehrerer Leuchtdioden in der Kraftfahrzeugleuchte z.B. mittels eines oder mehrerer Komparatoren und teilt dies dem Steuergerät mit. Diese elektronische Schaltungsanordnung zur Ausfallerkennung kann durch eine beispielsweise auf dem Leuchtmittelträger aufgebrachte elektronische Steuerschaltung verwirklicht sein.

Darüber hinaus können LEDs weiterer elektronischer Steuerschaltungen bedürfen. Beispiele hierfür sind elektronische Steuerschaltungen:
- zur Regelung und/oder Steuerung der Helligkeit bzw. Leuchtkraft der LEDs, beispielsweise durch eine pulsweitenmodulierte Taktung der Stromversorgung für einen vorzugsweise außerhalb des für das menschliche Auge wahrnehmbaren Bereichs gepulsten Betrieb,
- zur Kompensation oder Vermeidung elektromagnetischer Störungen, beispielsweise aufgebaut aus Kondensatoren und/oder Ferriten,
- zum Schutz der LEDs z.B. vor einer Überspannung des Bordnetzes oder vor fehlerhafter Polung, beispielsweise umfassend eine oder mehrere Zenerdioden.

Zusammengefasst muss für fast alle LED-Anwendungen eine mehr oder minder umfangreiche, für die speziellen LEDs ausgelegte elektronische Steuerschaltung z.B. auf den mindestens einen Leuchtmittelträger aufgebracht werden. Die elektronische Steuerschaltung umfasst im einfachsten Fall einen Vorwiderstand und eine Schutzdiode, kann aber je nach Anwendung auch wesentlich mehr Elektronikbauteile enthalten, wie z.B. Mikrokontroller bzw. Kontroller, Komparatoren, Transistoren, Schutzdioden, elektrische Widerstände z.B. als Vorwiderstand, Kondensatoren, Ferrite, etc.

Somit kann eine Kraftfahrzeugleuchte mit einer oder mehreren LEDs als Lichtquelle zumindest ein oben genanntes Elektronikbauteil sowie mindestens eine LED umfassen. Demnach kann eine Kraftfahrzeugleuchte mit einer oder mehreren LEDs als Lichtquellen neben der LED zumindest noch über ein weiteres Elektronikbauelement verfügen.

Die Abdeckblende kann auf ihrer der Lichtscheibe zugewandten Vorderseite mit einer Reflektorstruktur versehen sein, welche einer gegebenenfalls auf dem Reflektor vorgesehenen Reflektorstruktur entspricht bzw. mit dieser identisch ist. Hierdurch entsteht bei direktem Blick auf die Kraftfahrzeugleuchte insbesondere im Kaltzustand bei ausgeschaltetem Leuchtmittel der Eindruck eines Reflektors ohne Lichtquelle. Die Reflektorstruktur kann beispielsweise durch Bedampfen verspiegelt sein.

Die Abdeckblende kann auf ihrer der Lichtscheibe zugewandten Vorderseite mit mindestens einer Grafik versehen sein. Die Grafik kann beispielsweise reliefartig erhaben oder vertieft oder flächig bündig in die Vorderseite eingearbeitet sein.

Bei der Grafik kann es sich um ein oder mehrere Bilder und/oder Zeichnungen und/oder grafische Darstellungen und/oder Logos und/oder Schriftzeichen, wie etwa Buchstaben und/oder Ziffern, etc. oder um eine oder mehrere Kombinationen hieraus handeln, wie etwa um ein Markenemblem, um nur einige denkbare Ausgestaltungen von Grafiken aufzuzählen.

Besonders bevorzugt ist die Grafik als ein Markenzeichen oder Logo ausgebildet, vorzugsweise als ein Markenzeichen oder Logo eines Herstellers von Kraftfahrzeugen, in welche die Kraftfahrzeugleuchte zum Einbau vorgesehen ist.

Alternativ oder zusätzlich kann die Grafik Prüfzeichen und/oder Zulassungszeichen umfassen, welche beispielsweise durch eine Hinterleuchtung im Kalt-oder Warmzustand einwandfrei sichtbar sein können und im Kaltzustand als nicht störend empfunden werden.

Ein beispielsweise durchgestochener Bereich in der Blende kann gegebenenfalls dazu dienen, die Grafik hinterzuleuchten, beispielsweise mittels eines Lichtleiters.

Der Leuchteninnenraum der Kraftfahrzeugleuchte kann in eine oder mehrere, einer gemeinsamen und/oder verschiedenen Lichtfunktionen zugeordnete Leuchtenkammern unterteilt sein, von denen mindestens eine Leuchtenkammer wie zuvor beschrieben mit einem Reflektor mit einer als Lampenloch dienenden Aussparung und einer Abdeckblende ausgestattet ist, hinter der mindestens eine Lichtquelle wenigstens eines Leuchtmittels angeordnet ist, und bei der der Strahlengang des von zumindest einer Lichtquelle abgestrahlten Lichts zumindest zwischen zwei verschiedenen Strahlengängen veränderlich ist. Jeder der Strahlengänge dient dabei der Erfüllung einer Abstrahlcharakteristik einer eigenen Lichtfunktion.

Die Kraftfahrzeugleuchte kann beispielsweise als Heckleuchte für ein Kraftfahrzeug ausgebildet sein.

Es ist ersichtlich, dass die Erfindung in jedem Fall verwirklicht sein kann durch mindestens eine beim Blick von außerhalb einer Kraftfahrzeugleuchte durch die Lichtscheibe hindurch hinter einer Abdeckblende angeordnete Lichtquelle eines Leuchtmittels, welche unabhängig von oder gemeinsam mit der Abdeckblende wenigstens von einer ersten Position in eine zweite Position relativ zu einem mit einer als Lampenloch für die mindestens eine Lichtquelle dienenden Aussparung versehenen Reflektor in Richtung einer lokalen Flächennormalen einer durch die Aussparung gebildeten Fläche verstell- bzw. verschiebbar beweglich angeordnet ist. Die Abdeckblende verwehrt sowohl im Kalt- als auch im Warmzustand den direkten Blick auf die mindestens eine hinter der Abdeckblende angeordnete Lichtquelle des Leuchtmittels. Die bewegliche Anordnung der Lichtquelle relativ zum Reflektor erlaubt die Veränderung des Strahlengangs des von der mindestens einen Lichtquelle ausgestrahlten Lichts, so dass zwei oder mehr Lichtfunktionen, die unterschiedliche Lichtfarben und/oder Abstrahlcharakteristika aufweisen können, innerhalb der selben Leuchtenkammer verwirklicht werden können. Das von der mindestens einen Lichtquelle abgestrahlte Licht wird dabei in den unterschiedlichen Strahlengängen für jede der Lichtfunktionen unter Einhaltung einer beispielsweise gesetzlich vorgegebenen Leuchtdichte und Lichtverteilung in einer oder mehreren Vorzugsrichtungen für das aus der Kraftfahrzeugleuchte austretende Licht vom Reflektor reflektiert.

Die Erfindung ermöglicht eine Multilichtfunktionsausführung in einer Leuchtenkammer einer Kraftfahrzeugleuchte, bei der verschiedene Lichtfunktionen gleicher oder unterschiedlicher Lichtfarbe in einer Leuchtenkammer zeitversetzt oder zeitgleich ausgeführt werden können.

Durch eine Veränderung des Strahlengangs ermöglicht die Erfindung beispielsweise mittels Defokussierung der Lichtquelle eine Mehrfachbelegung von Lichtfunktionen in einer Leuchtenkammer. Auch ist es hierdurch möglich ohne Defokussierung auszukommen und stattdessen mehrere Lichtquellen einzusetzen. Hierdurch können auch Lichtfunktionen kombiniert werden, die unterschiedliche Lichtfarben benötigen bzw. aufweisen.

Zusätzlich erfolgt eine Kaschierung der Lichtquelle vermittels der Abdeckblende, wodurch der direkte Blick von außerhalb der Kraftfahrzeugleuchte durch die Lichtscheibe hindurch auf die Lichtquelle und das dahinter liegende Lampenloch und/oder einen hinter der Lichtquelle vorgesehenen Primärreflektor verwehrt ist.

Die Erfindung bricht mit der grundsätzlichen Ausgestaltung nach dem Stand der Technik, zur Erfüllung mehrerer Lichtfunktionen in einer Leuchtenkammer verschiedene und/oder unterschiedlich stark bestromte Leuchtmittel gleicher Lichtfarbe vorzusehen.

Vorteile gegenüber dem Stand der Technik ergeben sich unter Anderem dadurch, dass vermittels der Abdeckblende eine für den Betrachter insbesondere im Kaltzustand lampenlochfreie Leuchtenkammer geschaffen wird, frei von außerhalb des Leuchteninnenraums durch die Lichtscheibe hindurch gesehen sichtbaren Lichtquellen, die im Warmzustand eine einwandfreie, hohe Güte ihres optischen Systems aufweist, einhergehend mit einer im Vergleich zum Stand der Technik geringeren Belastung eines Bordnetzes eines Kraftfahrzeugs wodurch eine Verringerung des Kraftstoff- bzw. Energiebedarfs des Kraftfahrzeugs erreicht wird.

Weitere Vorteile ergeben sich durch einen geringen Bauraumbedarf aufgrund mehrerer in einer Leuchtenkammer verwirklichter Lichtfunktionen gleicher oder unterschiedlicher Lichtfarbe und/oder gleicher oder unterschiedlicher Abstrahlcharakteristik. Die Kraftfahrzeugleuchte erlaubt damit die Ausführung mehrerer verschiedener Lichtfunktionen in nur einer Leuchtenkammer.

Zusätzliche Vorteile ergeben sich dadurch, dass im auch als Warmzustand bezeichneten eingeschalteten Zustand des Leuchtmittels ein direkter Blick auf die zur Erfüllung mindestens einer Lichtfunktion der Kraftfahrzeugleuchte vorgesehene mindestens eine Lichtquelle eines Leuchtmittels verhindert ist.

Weitere Vorteile ergeben sich insbesondere dadurch, dass durch die Verstellung zwischen den unterschiedlichen Strahlengängen Lichtfunktionen mit verschiedenen Abstrahlcharakteristika in nur einer Leuchtenkammer erfüllt werden können. Dies stellt ein Novum dar, wodurch ein lange bestehendes Vorurteil des Standes der Technik überwunden werden kann, wonach nur verschiedene Lichtfunktionen gleicher Lichtfarbe und gleicher Abstrahlcharakteristik innerhalb einer Leuchtenkammer zeitversetzt erfüllt werden können.

Durch eine Veränderung des Strahlengangs vermittels einer beweglich angeordneten Abdeckblende ergibt sich darüber hinaus die Möglichkeit, vermittels der Abdeckblende im Kaltzustand das Lampenloch im Reflektor zumindest annähernd vollständig zu verschließen. Dadurch werden im Kaltzustand die eine oder mehreren Lichtquellen des Leuchtmittels vollständig verborgen, ohne Einschränkungen insbesondere lichttechnischer Natur im Warmzustand in Kauf nehmen zu müssen.

Die Erfindung wird nachfolgend anhand von in den Zeichnungen dargestellter Ausführungsbeispiele näher erläutert. Darin bezeichnen gleiche Bezugszeichen gleiche oder gleich wirkende Elemente. Der Übersicht halber sind nur Bezugszeichen in den einzelnen Zeichnungen dargestellt, die für die Beschreibung der jeweiligen Zeichnung erforderlich sind. Die Größenverhältnisse der einzelnen Elemente zueinander entsprechen dabei nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:

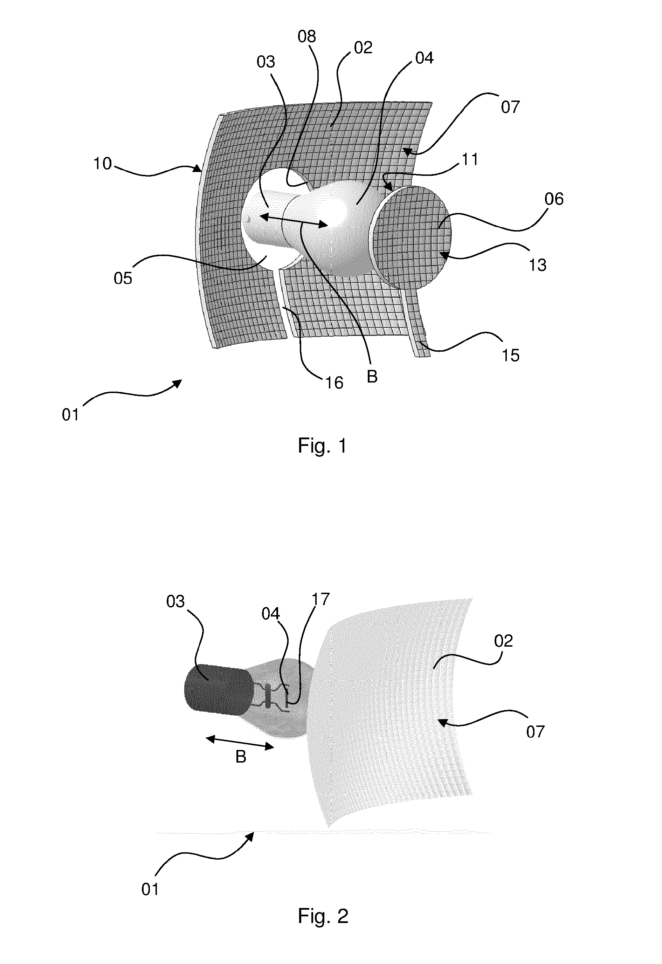

- Fig. 1: eine perspektivische Ansicht eines ersten Ausführungsbeispiels einer Leuchtenkammer einer Kraftfahrzeugleuchte umfassend einen mit einer als Lampenloch dienenden Aussparung versehenen Reflektor sowie einer die Aussparung überdeckenden, vor mindestens einer Lichtquelle wenigstens eines Leuchtmittels angeordneten Abdeckblende sowie zumindest einer zum Erhalt unterschiedlicher Strahlengänge entlang einer Bewegungsbahn zwischen zwei Positionen beweglich angeordneten Lichtquelle eines Leuchtmittels.
- Fig. 2: eine perspektivische Ansicht der Leuchtenkammer aus Fig. 1 in einem dritten Zustand.

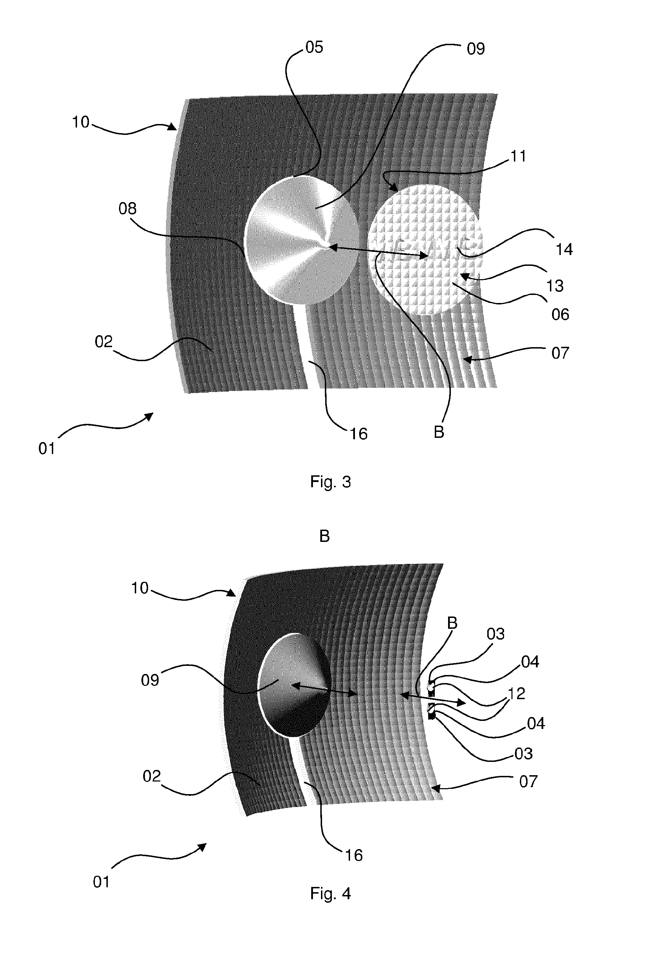

- Fig. 3: eine perspektivische Ansicht eines zweiten Ausführungsbeispiels einer Leuchtenkammer einer Kraftfahrzeugleuchte umfassend einen mit einer als Lampenloch dienenden Aussparung versehenen Reflektor sowie einer die Aussparung überdeckenden, vor mindestens einer Lichtquelle wenigstens eines Leuchtmittels angeordneten Abdeckblende sowie zumindest einen zum Erhalt unterschiedlicher Strahlengänge entlang einer Bewegungsbahn zwischen zwei Positionen beweglich angeordneten, zumindest teilweise und/oder mindestens zeitweilig in der Aussparung angeordneten und/oder die Aussparung zumindest teilweise und/oder wenigstens zeitweilig einnehmenden Primärreflektor, wobei die mindestens eine Lichtquelle zwischen der Abdeckblende und dem Primärreflektor angeordnet ist.
- Fig. 4: eine perspektivische Ansicht der Kraftfahrzeugleuchte aus Fig. 3 bei entfernter Abdeckblende, um den Blick auf an der entlang einer Bewegungsbahn zwischen zwei Positionen beweglich angeordneten Abdeckblende angeordnete, dort mechanisch befestigte und elektrisch kontaktierte Lichtquellen eines Leuchtmittels frei zu geben.

Eine in den Fig. 1 bis Fig. 4 ganz oder in Teilen dargestellte Leuchtenkammer 01 einer beispielsweise als Heckleuchte ausgeführten Kraftfahrzeugleuchte weist mindestens einen Reflektor 02 sowie wenigstens ein Leuchtmittel 03 mit zumindest einer Lichtquelle 04 auf. Der mindestens eine Reflektor 02 mitsamt dem wenigstens einen zumindest eine Lichtquelle 04 umfassenden Leuchtmittel 03 können in einem von einem nicht näher dargestellten Leuchtengehäuse und einer transparenten, vorzugsweise klaren und farblosen Lichtscheibe umschlossenen Leuchteninnenraum einer Kraftfahrzeugleuchte beherbergt sein.

Sind eine oder mehrere Glühlampen als Lichtquelle 04 vorgesehen, ist bevorzugt eine eingefärbte Lichtscheibe zur Farbfilterung verwendet.

In dem Reflektor 02 ist mindestens eine Aussparung 05 als Lampenloch für wenigstens eine Lichtquelle 04 des Leuchtmittels 03 vorgesehen.

Die Leuchtenkammer 01 umfasst eine die durch die Aussparung 05 dem Reflektor 02 entnommene Fläche überdeckende, die Struktur des die Aussparung 05 umgebenden Reflektors 02 vorzugsweise nachbildende Abdeckblende 06.

Die mindestens eine Lichtquelle 04 ist mit Blick auf die in den Fig. 1 bis Fig. 4 dem Betrachter und der Lichtscheibe der Kraftfahrzeugleuchte zugewandte Vorderseite 07 des Reflektors 02, beispielsweise in Richtung einer lokalen Flächennormalen einer durch die Aussparung 05 gebildeten Fläche gesehen, hinter der Abdeckblende 06 angeordnet, so dass die Abdeckblende 06 den Blick auf das durch die Aussparung 05 gebildete Lampenloch und die mindestens eine Lichtquelle 04 verwehrt, wodurch die Lichtquelle 04 und das Lampenloch bzw. die Aussparung 05 durch die Lichtscheibe hindurch gesehen hinter der der Lichtscheibe ab- und der Aussparung 05 zugewandten Rückseite 11 der Abdeckblende 06 angeordnet und dadurch vor direkten Blicken geschützt bzw. verborgen sind.

Die Leuchtenkammer 01 zeichnet sich durch eine Verstellbarkeit bzw. Verstellung des Strahlengangs des von der mindestens einen Lichtquelle 04 in den Reflektor 02 abgestrahlten Lichts in bzw. zwischen mindestens zwei Strahlengängen aus. Dabei ist wenigstens ein erster Strahlengang in einem ersten Zustand der Leuchtenkammer 01 zur Erfüllung einer ersten Lichtfunktion und zumindest ein zweiter Strahlengang in einem zweiten Zustand der Leuchtenkammer 01 zur Erfüllung einer zweiten Lichtfunktion vorgesehen. Anhand der unterschiedlichen Strahlengänge können vermittels nur einer Leuchtenkammer 01 mindestens zwei beliebige Lichtfunktionen der Kraftfahrzeugleuchte gleicher oder unterschiedlicher Lichtfarbe und/oder gleicher oder unterschiedlicher Abstrahlcharakteristika verwirklicht werden. Der die Aussparung 05 umgebende Reflektor 02 reflektiert dabei das in ihn in den unterschiedlichen Strahlengängen beispielsweise von mindestens einer Lichtquelle 04 eingestrahlte Licht an der Abdeckblende 06 vorbei durch die Lichtscheibe der Kraftfahrzeugleuchte hindurch aus der Leuchtenkammer 01 heraus.

Dabei kann der erste Strahlengang derart ausgelegt sein, dass eine fokussierte Abstrahlcharakteristik erhalten wird, wohingegen der zweite Strahlengang derart ausgelegt sein kann, dass eine defokussierte Abstrahlcharakteristik erhalten wird.

Zum Erhalt unterschiedlicher Strahlengänge kann beispielsweise die mindestens eine Lichtquelle 04 entlang einer bzw. in Richtung einer durch Doppelpfeile angedeuteten Bewegungsbahn B relativ zum die Aussparung 05 umgebenden Reflektor 02 zumindest zwischen zwei unterschiedlichen, wenigstens zwei verschiedenen Zuständen der Leuchtenkammer 01 entsprechenden und mit unterschiedlichen Strahlengängen einhergehenden Positionen beweglich angeordnet sein.

Die Kraftfahrzeugleuchte zeichnet sich hiernach durch eine relative Verstellbarkeit der mindestens einen Lichtquelle in wenigstens zwei den mindestens zwei Zuständen der Leuchtenkammer 01 entsprechenden unterschiedlichen Positionen gegenüber dem die Aussparung 05 umgebenden Reflektor 02 zur Verstellung des Strahlengangs zwischen mindestens zwei unterschiedlichen Strahlengängen aus. Hierdurch werden durch unterschiedliche Lagen der mindestens einen Lichtquelle 04 zum Brennpunkt des Reflektors 02 verschiedene Strahlengänge einhergehend mit verschiedenen Licht- und Leuchtdichtenverteilungen aufweisenden Abstrahlcharakteristika erhalten. Beim ersten Strahlengang, beispielsweise in der ersten Position der mindestens einen Lichtquelle 04 relativ zum Reflektor 02, wird im Betrieb mindestens einer Lichtquelle 04 eine wenigstens einer ersten Lichtfunktion genügende Licht- und Leuchtdichtenverteilung einer ersten Abstrahlcharakteristik erhalten. Beim zweiten Strahlengang, beispielsweise in der zweiten Position der mindestens einen Lichtquelle 04 relativ zum Reflektor, wird im Betrieb mindestens einer Lichtquelle 04 eine wenigstens einer zweiten Lichtfunktion genügende Licht- und Leuchtdichtenverteilung einer zweiten Abstrahlcharakteristik erhalten.

Bei der mindestens einen Lichtquelle 04 kann es sich beispielsweise um eine oder mehrere LEDs 12 (Fig. 4) oder um eine oder mehrere Glühwendeln 17 eines als Glühlampe ausgeführten Leuchtmittels 03 handeln.

Bevorzugt ragt die mindestens eine Lichtquelle 04 in dem ersten Zustand und/oder in dem zweiten Zustand der Leuchtenkammer 01 auf der Vorderseite 07 des Reflektors 02 über die durch die von der vom Reflektor 02 begrenzten Aussparung 05 gebildete Fläche bzw. über den die Aussparung 05 begrenzenden und diese umgebenden Rand 08 des Reflektors 02. Denkbar ist auch, dass sich die mindestens eine Lichtquelle 04 im ersten oder zweiten Zustand noch hinter der Rückseite 10 des Reflektors 02 im durch die Aussparung 05 gebildeten Lampenloch befindet.

Hierbei kann zusätzlich an der Rückseite 11 der Abdeckblende 06 ein Primärreflektor angebracht sein, der das Licht auf den Reflektor 02 lenkt und anschließend aus der Leuchte heraus lenkt.

Die Abdeckblende 06 kann gemeinsam mit der Lichtquelle 04 oder unabhängig von dieser in Richtung der Bewegungsbahn B relativ zum Reflektor 02 beweglich angeordnet sein.

Ist die Abdeckblende 06 gemeinsam mit der Lichtquelle 04 beweglich angeordnet, kann die Lichtquelle 04 an der Abdeckblende 06 mechanisch befestigt und elektrisch kontaktiert angeordnet sein, so dass nur eine Mimik für die Relativbewegung zwischen Reflektor 02 und Abdeckblende 06 erforderlich ist.

Die mindestens eine Lichtquelle 04 kann an der der Lichtscheibe ab- und dem die Aussparung 05 umgebenden Reflektor 02 zugewandten Rückseite 11 der Abdeckblende 06 mechanisch befestigt und elektrisch kontaktiert sein.

Sofern zum Erhalt mindestens zweier unterschiedlicher Strahlengänge bzw. zur Verstellung des Strahlengangs der Leuchtenkammer 01 zwischen mindestens zwei unterschiedlichen Strahlengängen eine relative Verstellbarkeit der mindestens einen Lichtquelle 04 in wenigstens zwei unterschiedlichen Positionen gegenüber dem die Aussparung 05 umgebenden Reflektor 02 vorgesehen ist, erfolgt eine gemeinsame Verstellung von Abdeckblende 06 und an deren Rückseite 11 angeordneter mindestens einen Lichtquelle 04 gegenüber dem die Aussparung umgebenden Reflektor 02. Dadurch ist wie bereits erwähnt nur eine Mimik für eine zum Erhalt unterschiedlicher Strahlengänge erforderliche Relativbewegung zwischen Reflektor 02 und der mindestens einen gemeinsam mit der Abdeckblende 06 relativ zum die Aussparung 05 umgebenden Reflektor 02 beweglich angeordneten Lichtquelle 04 erforderlich.

Zumindest die Abdeckblende 06 kann beispielsweise gemeinsam mit der mindestens einen Lichtquelle 04 oder unabhängig von dieser entlang einer Bewegungsbahn B, bevorzugt in Richtung einer lokalen Flächennormalen einer durch die Aussparung 05 gebildeten Fläche zumindest zwischen einem einem ersten Warmzustand mit eingeschalteter Lichtquelle 04 entsprechenden ersten Zustand der Leuchtenkammer 01, in dem ein erster Strahlengang vorliegt und die Leuchtenkammer 01 eine erste Lichtfunktion mit einer ersten Lichtfarbe und einer ersten Abstrahlcharakteristik erfüllt, und einem einem zweiten Warmzustand mit eingeschaltetem Leuchtmittel entsprechenden zweiten Zustand der Leuchtenkammer 01, in dem ein zweiter Strahlengang vorliegt und die Leuchtenkammer 01 eine zweite Lichtfunktion mit einer zweiten Lichtfarbe und einer zweiten Abstrahlcharakteristik erfüllt, relativ zum Reflektor 02 beweglich angeordnet sein, um die verschiedenen Strahlengänge zu erzeugen. Dabei können im ersten und im zweiten Warmzustand gleiche oder unterschiedliche Lichtquellen 04 des Leuchtmittels 03 aktiv sein.

Die erste und die zweite Lichtfarbe können identisch oder verschieden sein. Hierzu können eine oder mehrere Lichtquellen 04 vorgesehen sein, die Licht gleicher oder unterschiedlicher Lichtfarbe abstrahlen.

Darüber hinaus können die erste und die zweite Abstrahlcharakteristik gleich oder unterschiedlich sein.

Zumindest die Abdeckblende 06 kann entlang bzw. in Richtung der durch Doppelpfeile angedeuteten Bewegungsbahn B zumindest zwischen einem einem in Fig. 1 und Fig. 3 dargestellten Warmzustand der Leuchtenkammer 01 mit eingeschaltetem Leuchtmittel 03 entsprechenden ersten und/oder zweiten Zustand und einem einem in Fig. 2 dargestellten Kaltzustand der Leuchtenkammer 01 mit ausgeschaltetem Leuchtmittel 03 entsprechenden dritten Zustand relativ zum Reflektor 02 beweglich angeordnet sein.

In dem in Fig. 2 dargestellten, dritten Zustand der Leuchtenkammer 01 schließt die Abdeckblende 06 die Aussparung 05 im Reflektor 02 vorzugsweise bündig oder beispielsweise anliegend an einen die Aussparung 05 umgebenden Rand 08 des Reflektors 02 die Aussparung 05 überlappend ab.

In dem in Fig. 1, Fig. 3 und Fig. 4 dargestellten, ersten oder zweiten Zustand der Leuchtenkammer 01 gibt die Abdeckblende 06 die Aussparung 05 demgegenüber frei und befindet sich beim in Fig. 1, Fig. 2, Fig. 3 und Fig. 4 dargestellten Blick auf die vor der Vorderseite 07 des Reflektors 02 vor der vom Reflektor 02 begrenzten Aussparung 05.

Fig. 4 zeigt hierbei die selbe Ansicht mit Blick auf die Vorderseite 07 des Reflektors 02 wie Fig. 3, wobei die Abdeckblende 06 der Übersichtlichkeit halber entfernt ist, um zur Erläuterung des Aufbaus der Leuchtenkammer 01 den Blick auf an oder hinter der Abdeckblende 06 angeordnete, dort vorzugsweise mechanisch befestigte und elektrisch kontaktierte Lichtquellen 04 eines Leuchtmittels 03 der Leuchtenkammer 01 frei zu geben.

Die Bewegungsbahn B kann zumindest abschnittsweise entlang einer eine lokale Flächennormale einer durch die Aussparung 06 gebildeten Fläche umfassenden Geraden verlaufen. Vorzugsweise ist die Bewegungsbahn B eine Strecke entlang einer eine lokale Flächennormale einer durch die Aussparung 06 gebildeten Fläche umfassenden Geraden.

Die Abdeckblende 06 kann mit der Aussparung 05 korrespondierend ausgebildet sein. Beispielsweise kann die Abdeckblende 06 wie in Fig. 1 dargestellt die Aussparung 05 in Form, Funktion und Aussehen des Reflektors 02 nachbilden. Hierdurch ist im in Fig. 2 dargestellten dritten Zustand weder die Aussparung 05, noch die Abdeckblende 06 erkennbar. Für den Betrachter ergibt sich der Eindruck eines vollkommen homogenen, lampenloch- und lichtquellenfreien Reflektors 02.

Die Abdeckblende 06 kann im in Fig. 2 dargestellten, dem Kaltzustand entsprechenden dritten Zustand, die Aussparung 05 auf zweierlei Art und Weise abdecken.

Zum einen kann die Abdeckblende 06 die Aussparung 05 und damit mit der Vorderseite 07 des Reflektors 02 bündig abschließen. Abgesehen von erforderlichen Toleranzen und Spalten, die notwendig sind, dass die Abdeckblende 06 in die Aussparung 05 einfahren kann, um bündig mit der Vorderseite 07 des Reflektors 02 abzuschließen, weist dabei die Abdeckblende 06 eine mit der durch den die Aussparung 05 begrenzenden und diese umgebenden Rand 08 des Reflektors 02 gebildeten Außenkontur hinsichtlich Geometrie und Abmessungen identische Form auf.

Zum anderen kann die Abdeckblende 06 in dem in Fig. 2 dargestellten dritten Zustand an den die Aussparung 05 umgebenden Reflektor 02 auf dessen der Lichtscheibe zugewandten Vorderseite 07 anliegen und dabei den die Aussparung 05 umgebenden Rand 08 des Reflektors 02 überlappen. Hierbei schließt die Abdeckblende 06 nicht um die Aussparung 05 herum bündig mit der Vorderseite 07 des Reflektors 02 ab. Dafür ist die Herstellung vereinfacht, da das Überlappen einen Toleranzausgleich erlaubt.

Die Leuchtenkammer 01 kann darüber hinaus wie in Fig. 3 und Fig. 4 dargestellt einen Primärreflektor 09 umfassen. Der Primärreflektor 09 ist zumindest teilweise und/oder mindestens zeitweilig in der Aussparung 05 angeordnet. Alternativ oder zusätzlich nimmt der Primärreflektor das durch die Aussparung 05 gebildete Lampenloch zumindest teilweise und/oder wenigstens zeitweilig ein. Die mindestens eine Lichtquelle 04 ist zwischen der Abdeckblende 06 und dem Primärreflektor 09 angeordnet. Der Primärreflektor 09 reflektiert von der mindestens einen Lichtquelle 04 in Richtung der Aussparung 05 gestrahltes Licht in den die Aussparung 05 umgebenden Reflektor 02 und/oder unter Einhaltung einer vorgegebenen Abstrahlcharakteristik beispielsweise durch die Lichtscheibe der Kraftfahrzeugleuchte hindurch direkt aus der Leuchtenkammer 01 heraus.

Der Primärreflektor 09 kann zum Erhalt bzw. zur Erzeugung unterschiedlicher Strahlengänge gemeinsam mit oder unabhängig von der Abdeckblende 06 und/oder der mindestens einen Lichtquelle 04 zumindest zwischen zwei unterschiedlichen, wenigstens zwei verschiedenen Zuständen der Leuchtenkammer 01 entsprechenden Positionen relativ zum die Aussparung 05 umgebenden Reflektor 02 beweglich angeordnet sein.

Ist der Primärreflektor 09 beweglich angeordnet, schließt der Primärreflektor 09 im ersten und/oder zweiten Zustand der Leuchtenkammer vorzugsweise entweder bündig mit dem die Aussparung 05 umgebenden Reflektor 02 bzw. dessen Vorderseite 07 ab, oder liegt beispielsweise an den die Aussparung 05 umgebenden Reflektor 02 auf dessen der Lichtscheibe abgewandten Rückseite 10 an und überlappt dabei den die Aussparung 05 umgebenden Rand 08 des Reflektors 02.

Der Primärreflektor 09 nimmt im ersten und/oder im zweiten Zustand die Aussparung 05 bevorzugt zumindest teilweise ein und schließt bevorzugt bündig mit dem die Aussparung 05 umgebenden Reflektor 02 ab. Schließt der Primärreflektor 09 im zweiten Zustand bündig mit dem die Aussparung 05 umgebenden Reflektor 02 ab, kann sich im ersten Zustand der Primärreflektor 09 von der Abdeckblende 06 aus gesehen vor oder hinter dem die Aussparung 05 umgebenden Reflektor 02 befinden. Alternativ kann der Primärreflektor 09 im zweiten Zustand an den die Aussparung 05 umgebenden Reflektor 02 auf dessen der Lichtscheibe abgewandten Rückseite 10 oder auf dessen der Lichtscheibe zugewandte Vorderseite 07 anliegen und dabei einen die Aussparung 05 umgebenden Rand 08 des Reflektors 02 überlappen, je nachdem, ob sich der Primärreflektor 09 im ersten Zustand hinter oder vor dem die Aussparung 05 umgebenden Reflektor 02 befindet.

Die Abdeckblende 06 kann auf ihrer dem Betrachter ab- und dem Reflektor 02 bzw. der Aussparung 05 zugewandten Rückseite 11 mit einem Sekundärreflektor versehen sein, welcher auf die Rückseite 11 der Abdeckblende 06 gestrahltes Licht in den die Aussparung 05 umgebenden Reflektor 02 reflektiert. Ist beispielsweise die mindestens eine Lichtquelle 04 relativ zur Abdeckblende 06 oder zum Reflektor 02 unbeweglich angeordnet, so kann durch eine Relativbewegung zwischen Abdeckblende 06 und dem die Aussparung 05 umgebenden Reflektor 02 eine Veränderung des Strahlengangs erreicht werden.

Generell kann ein Sekundärreflektor an der der Lichtscheibe abgewandten Rückseite 11 der Abdeckblende 06 vorgesehen sein, beispielsweise indem die Abdeckblende 06 an ihrer der Lichtscheibe abgewandten Rückseite 11 mit einem derartigen Sekundärreflektor beispielsweise in Form einer dort ausgebildeten und beispielsweise verspiegelten Sekundärreflektorstruktur versehen ist oder indem ein solcher Sekundärreflektor an der Rückseite 11 der Abdeckblende 06 angeordnet ist.

Der Sekundärreflektor sowie bei einer festen Anordnung des Sekundärreflektors an der Rückseite 11 der Abdeckblende 06 gegebenenfalls auch die Abdeckblende 06, können zum Erhalt unterschiedlicher Strahlengänge entlang einer Bewegungsbahn B relativ zum die Aussparung 05 umgebenden Reflektor 02 zumindest zwischen zwei unterschiedlichen, wenigstens zwei verschiedenen Zuständen der Leuchtenkammer 01 entsprechenden Positionen beweglich angeordnet sein.

Der Sekundärreflektor kann beispielsweise starr oder entlang einer Bewegungsbahn B zwischen zwei oder mehr Positionen verstellbar an der Rückseite 11 der Abdeckblende 06 angeordnet sein.

Eine besonders hohe Varianz an möglichen unterschiedlichen Strahlengängen einhergehend mit einer besonders hohen Effizienz des optischen Systems der Leuchtenkammer 01 ergibt sich durch einen verstellbar angeordneten Primärreflektor 09 in Verbindung mit einem an der dem die Aussparung 05 umgebenden Reflektor 02 zugewandten Rückseite 11 der vorzugsweise ebenfalls verstellbar angeordneten Abdeckblende 06 angeordneten Sekundärreflektor, so dass durch Mehrfachreflexion am Primärreflektor 09, dem an der Abdeckblende 06 beispielsweise angeordneten oder befestigten Sekundärreflektor sowie dem die Aussparung 05 umgebenden Reflektor 02 eine Abstrahlcharakteristik beim Austritt aus der Lichtscheibe der Kraftfahrzeugleuchte erhalten wird, welche die gesetzlichen Vorgaben an eine Lichtfunktion einer Kraftfahrzeugleuchte in Bezug auf Leuchtdichteverteilung in einer oder mehreren Vorzugsrichtungen einhält. Primärreflektor 09 und Sekundärreflektor bzw. Abdeckblende 06 können dabei gemeinsam und/oder unabhängig voneinander beispielsweise relativ zum die Aussparung 05 umgebenden Reflektor 02 und/oder zur mindestens einen Lichtquelle 04 verstellbar angeordnet sein, um verschiedene Strahlengänge zu erhalten. Die besonders hohe Effizienz des optischen Systems kann unter anderem dadurch begründet werden, dass der die Aussparung zumindest in einem Zustand wenigstens teilweise einnehmenden Primärreflektor 09 kein Licht durch das durch die Aussparung 05 gebildete Lampenloch hindurch hinter den die Aussparung 05 umgebenden Reflektor 02 vergeudet wird.

Zusammengefasst kann zur Verstellung des Strahlengangs:
- mindestens eine Lichtquelle 04 und/oder
- ein Primärreflektor 09 und/oder
- ein Sekundärreflektor und/oder
- der die Aussparung 05 umgebende Reflektor 02
   relativ zu
- dem die Aussparung 05 umgebende Reflektor 02 und/oder
- mindestens einer Lichtquelle 04 und/oder
- einem Primärreflektor 09 und/oder
- einem Sekundärreflektor
zwischen mindestens zwei verschiedenen Positionen beweglich angeordnet sein.

Beispielsweise kann auf der Rückseite 11 der Abdeckblende 06 alternativ oder zusätzlich eine Spiegeloptik für eine Lichtfunktion, wie etwa eine Seitenmarkierungslichtfunktion angebracht sein, welche nur in einem Zustand der Leuchtenkammer 01 bzw. in nur einer Relativposition bzw. in nur einem Strahlengang wirksam ist. Die Wirksamkeit in einem Strahlengang zeichnet sich dabei dadurch aus, dass in diesem Zustand eine gewünschte, beispielsweise gesetzlich vorgegebene Lichtverteilung der Lichtfunktion erfüllt wird.

Mindestens eine LED 12 kann wie in Fig. 4 dargestellt als wenigstens eine Lichtquelle 04 zumindest eines Leuchtmittels 03 der Leuchtenkammer 01 vorgesehen sein.

Durch die Verwendung von LEDs 12 als Lichtquellen 04 kann auf eine Farbfilterung durch eine eingefärbte Lichtscheibe verzichtet werden, wie sie beispielsweise bei Glühlampen erforderlich ist.

Bei der Verwendung von LEDs 12 ist eine solche Einfärbung der Lichtscheibe nicht erforderlich. Dadurch können bei der Verwendung von LEDs 12 auch farblose Lichtscheiben zum Einsatz kommen da keine Farbfilterung erforderlich ist. In diesem Fall können zugleich Kosten eingespart werden, da auf den Rottakt beim Kunststoffspritzen der Lichtscheibe komplett verzichtet werden kann. Darüber hinaus können mehrere gleich- oder verschiedenfarbige LEDs 12 als Lichtquellen 04 eines Leuchtmittels 03 vorgesehen sein, beispielsweise um mehrere Lichtfunktionen beispielsweise unterschiedlicher Helligkeit und/oder unterschiedlicher Farbe in ein und der selben Leuchtenkammer der Leuchtenkammer 01 unter zu bringen.

Alternativ oder zusätzlich kann die Lichtquelle 03 wenigstens einen zumindest eine Lichtaustrittsfläche aufweisenden Lichtaustrittsbereich mindestens eines Lichtleiters umfassen, in den in einem einem ersten oder zweiten Zustand der Leuchtenkammer 01 entsprechenden Warmzustand an mindestens einer von der Lichtauskoppelfläche verschiedenen Lichteinkoppelfläche eines Lichteinkoppelbereichs Licht eingekoppelt wird.

Die Abdeckblende 06 kann wie in Fig. 3 dargestellt auf ihrer der Lichtscheibe zugewandten Vorderseite 13 mit mindestens einer Grafik 14 versehen sein. Die Grafik 14 kann beispielsweise reliefartig erhaben oder vertieft oder flächig bündig in die Vorderseite 13 der Abdeckblende 06 eingearbeitet sein.

Bei der Grafik 14 kann es sich um ein oder mehrere Bilder und/oder Zeichnungen und/oder grafische Darstellungen und/oder Logos und/oder Schriftzeichen, wie etwa Buchstaben und/oder Ziffern, etc. oder um eine oder mehrere Kombinationen hieraus handeln, wie etwa um ein Markenemblem, um nur einige denkbare Ausgestaltungen von Grafiken aufzuzählen.

Die Abdeckblende 06 kann wie in Fig. 2 dargestellt einen Steg 15 umfassen, der mit einer entsprechenden Partie 16 der Aussparung 05 korrespondieren kann. Der Steg 15 kann der gegebenenfalls vorgesehenen beweglichen Anordnung der Abdeckblende 06 beispielsweise durch Befestigung an einer die Bewegung entlang der Bewegungsbahn B ausführenden Mimik dienen. Gleichzeitig kann der Steg 15 der Kaschierung einer eventuell vorgesehenen elektrischen Kontaktierung der Lichtquelle 04 eines Leuchtmittels 03 dienen, wie etwa der als Lichtquellen 04 vorgesehenen und an der Abdeckblende 06 mechanisch befestigten und elektrischen kontaktierten LEDs 12. Gegenüber einer Anbindung der Abdeckblende 06 nach hinten durch die Aussparung 05 hindurch hat dies den Vorteil einer abschattungsfreien Ausleuchtung des Reflektors 02. In Fig. 3 ist der Steg 15 der Übersichtlichkeit halber nicht dargestellt, ebenso wenig in Fig. 4, in welcher die gesamte Abdeckblende 06 nicht dargestellt ist, um die dort als Lichtquellen 04 vorgesehenen LEDs 12 zeigen zu können.

Wichtig ist hervorzuheben, dass der Leuchteninnenraum einer zuvor beschriebenen Kraftfahrzeugleuchte in eine oder mehrere Leuchtenkammern 01 unterteilt sein kann, von denen zumindest eine Leuchtenkammer 01 einen zuvor beschriebenen Reflektor 02 nebst mindestens einer Lichtquelle 04 umfasst, wobei der Strahlengang des von der mindestens einen Lichtquelle 04 ausgehenden Lichts zwischen mindestens zwei unterschiedlichen, zur Erfüllung verschiedener Lichtfunktionen dienender Strahlengänge verstellbar ist.

Die Erfindung ist insbesondere im Bereich der Herstellung von Kraftfahrzeugleuchten gewerblich anwendbar.

### Bezugszeichenliste

- 01: Leuchtenkammer
- 02: Reflektor
- 03: Leuchtmittel
- 04: Lichtquelle
- 05: Aussparung
- 06: Abdeckblende
- 07: Vorderseite des Reflektors
- 08: die Aussparung umgebender Rand des Reflektors
- 09: Primärreflektor
- 10: Rückseite des Reflektors
- 11: Rückseite der Abdeckblende
- 12: LED
- 13: Vorderseite der Abdeckblende
- 14: Grafik
- 15: Steg
- 16: Partie
- 17: Glühwendel

- B: Bewegungsbahn

## Patentansprüche

1. Kraftfahrzeugleuchte mit einem von einem Leuchtengehäuse und einer Lichtscheibe umschlossenen Leuchteninnenraum, welcher mindestens eine Leuchtenkammer (01) mit wenigstens ein Reflektor (02) und zumindest einem Leuchtmittel (03) mit mindestens einer Lichtquelle (04) beherbergt, wobei in dem Reflektor (02) mindestens eine Aussparung (05) als Lampenloch für wenigstens eine Lichtquelle (04) des zumindest einen Leuchtmittels (03) angeordnet ist, sowie eine die Aussparung (05) beim Blick von außerhalb der Kraftfahrzeugleuchte durch die Lichtscheibe hindurch überdeckende Abdeckblende (06) vorgesehen ist, und die mindestens eine Lichtquelle (04) mit Blick auf die der Lichtscheibe zugewandte Vorderseite (07) des Reflektors (02) gesehen hinter der Abdeckblende (06) angeordnet ist,
**gekennzeichnet durch**
eine Verstellung des Strahlengangs des von der mindestens einen Lichtquelle (04) in den Reflektor (02) abgestrahlten Lichts zwischen mindestens zwei Strahlengängen, wenigstens einem ersten Strahlengang in einem ersten Zustand der Leuchtenkammer (01) zur Erfüllung einer ersten Lichtfunktion und zumindest einem zweiten Strahlengang in einem zweiten Zustand der Leuchtenkammer (01) zur Erfüllung einer zweiten Lichtfunktion, wobei der die Aussparung (05) umgebende Reflektor (02) das in ihn in den unterschiedlichen Strahlengängen eingestrahlte Licht an der Abdeckblende (06) vorbei aus der Leuchtenkammer (01) heraus reflektiert.

2. Kraftfahrzeugleuchte nach Anspruch 1,
**dadurch gekennzeichnet,**
**dass** die mindestens eine Lichtquelle zum Erhalt unterschiedlicher Strahlengänge entlang einer Bewegungsbahn (B) relativ zum die Aussparung (05) umgebenden Reflektor (02) zumindest zwischen zwei unterschiedlichen, wenigstens zwei verschiedenen Zuständen der Leuchtenkammer (01) entsprechenden Positionen beweglich angeordnet ist.

3. Kraftfahrzeugleuchte nach Anspruch 2,
**dadurch gekennzeichnet,**
**dass** die Lichtquelle (04) in dem ersten und/oder zweiten Zustand auf der Vorderseite des Reflektors (02) über die durch die von der vom Reflektor (02) begrenzten Aussparung (05) gebildete Fläche ragt.

4. Kraftfahrzeugleuchte nach Anspruch 1, 2 oder 3,
**gekennzeichnet durch**
eine mechanische Befestigung und elektrische Kontaktierung der mindestens einen Lichtquelle (04) an der dem die Aussparung (05) umgebenden Reflektor (02) zugewandten Rückseite (11) der Abdeckblende (06).

5. Kraftfahrzeugleuchte nach einem der Ansprüche 1 bis 4,
**gekennzeichnet durch**
einen zumindest teilweise und/oder wenigstens zeitweilig in der Aussparung (05) angeordneten und/oder die Aussparung (05) mindestens teilweise und/oder wenigstens zeitweilig einnehmenden Primärreflektor (09), wobei die mindestens eine Lichtquelle (04) zwischen der Abdeckblende (06) und dem Primärreflektor (09) angeordnet ist.

6. Kraftfahrzeugleuchte nach Anspruch 5,
**dadurch gekennzeichnet,**
**dass** der Primärreflektor (09) zum Erhalt unterschiedlicher Strahlengänge entlang einer Bewegungsbahn (B) relativ zum die Aussparung (05) umgebenden Reflektor (02) zumindest zwischen zwei unterschiedlichen, wenigstens zwei verschiedenen Zuständen der Leuchtenkammer (01) entsprechenden Positionen beweglich angeordnet ist.

7. Kraftfahrzeugleuchte nach Anspruch 6,
**dadurch gekennzeichnet,**
**dass** der Primärreflektor (09) im ersten und/oder im zweiten Zustand die Aussparung (05) zumindest teilweise einnimmt und bündig mit dem die Aussparung (05) umgebenden Reflektor (02) abschließt.

8. Kraftfahrzeugleuchte nach einem der vorhergehenden Ansprüche,
**dadurch gekennzeichnet,**
**dass** die Abdeckblende (06) auf ihrer Rückseite (11) mit einem Sekundärreflektor versehen ist, welcher auf die Rückseite (11) der Abdeckblende (06) gestrahltes Licht in den die Aussparung (05) umgebenden Reflektor (02) reflektiert.

9. Kraftfahrzeugleuchte nach Anspruch 8,
**dadurch gekennzeichnet,**
**dass** zumindest der Sekundärreflektor zum Erhalt unterschiedlicher Strahlengänge entlang einer Bewegungsbahn (B) relativ zum die Aussparung (05) umgebenden Reflektor (02) zumindest zwischen zwei unterschiedlichen, wenigstens zwei verschiedenen Zuständen der Leuchtenkammer (01) entsprechenden Positionen beweglich angeordnet ist.

10. Kraftfahrzeugleuchte nach einem der vorhergehenden Ansprüche,
**gekennzeichnet durch**
eine bewegliche Anordnung der Abdeckblende (06) entlang einer Bewegungsbahn (B) und einen dritten Zustand der Leuchtenkammer (01), in dem die Abdeckblende (06) die Aussparung (05) im Reflektor (02) abschließt, wobei die Abdeckblende (06) in dem mindestens einen ersten Zustand und in dem mindestens einen zweiten Zustand der Leuchtenkammer (01) die Aussparung (05) freigibt und sich beim Blick auf die Vorderseite (07) des Reflektors (02) gesehen vor der vom Reflektor (02) begrenzten Aussparung (05) befindet.

11. Kraftfahrzeugleuchte nach einem der Ansprüche 2 oder 6 oder 9 oder 10 oder eines sich auf einen der Ansprüche 2 oder 6 oder 9 oder 10 rückbeziehenden Ansprüche,
**dadurch gekennzeichnet,**
**dass** die Bewegungsbahn (B) zumindest abschnittsweise entlang einer eine lokale Flächennormale einer durch die Aussparung (05) gebildeten Fläche umfassenden Geraden verläuft.
